# EUROPEAN PATENT APPLICATION

(11) **EP 0 551 193 A2**
(43) Date of publication of application: **14.07.1993**
(21) Application number: 93300087.9
(22) Date of filing: 07.01.1993
(51) Int. Cl.: G11B 15/02, G11B 15/10

(54) **Image signal processing systems**

(30) Priority: 07.01.1992 KR 9292 U
(71) Applicant: SAMSUNG ELECTRONICS CO. LTD., Suwon-city, Kyounggi-do (KR)
(72) Inventor: Hong, Sang-Beom, Segwipo-shi, Jeju-do (KR)
(74) Representative: Stanley, David William

(57) **Abstract**

A mode discriminating device for an image signal processing system comprises a cam switch 100 rotated by a loading motor, a voltage dividing means for producing a predetermined voltage divided upon the rotation of the cam switch 100, and a microcomputer 200 for discriminating a mode of a deck in the system on the basis of the divided voltage supplied from the voltage dividing means.

## Description

The present invention relates to an image signal processing system for recording or reading an image signal to or from a storage medium.

In a typical mode discriminating device used widely in image signal processing systems, several mode discriminating ports are arranged at predetermined positions of a cam switch in accordance with modes of a deck of the system. In such a device, modes of the system are discriminated on the basis of electrical signals produced at the mode discrimination ports by means of the cam switch which is rotated according to movement of the deck.

For example, assuming that three mode discriminating ports are provided in the cam switch, if the electrical signals produced at the mode discriminating ports are at a high, high and low level respectively, then a stop mode is discriminated whereas, if the signals are at a logic low, high and low level respectively, then a play mode is discriminated.

For example, such a mode discriminating technique is disclosed in U.S. Patent No. 5,061,848 entitled NON-CONTACTING ROTARY TYPE MODE SWITCH FOR MAGNETIC TAPE RECORDING DEVICE, in which a non-contacting rotary type mode switch having several reflecting party and light reflecting sensors is employed to discriminate a mode of a deck. That is, each of the reflecting party is formed on a corresponding one of multiple concentric tracks which are defined on a back surface of a mode switch gear and such light reflecting sensors are formed on an upper surface of the switch body to read the rotating mode of a cam gear and comprises a means for emitting light and a light receiving means for detecting the light reflected from the reflecting party.

With a conventional mode discriminating technique employing the mode discriminating ports, however, the ports must be contacted correctly with a requirement for high mechanical accuracy. Further, even if a microcomputer is employed to recognize data produced from the mode discriminating ports, erroneous data recognition may occur and the entire device may be complicated in construction.

In the technique disclosed in U. S. Patent No. 5,061,848, no erroneous contact is present in the device, but the entire device may be complicated in construction.

Preferred embodiments of the present invention aim to provide a mode discriminating device for an image processing system in which a single mode discriminating port receives a voltage level changed upon the rotation of a cam switch to discriminate a mode of a deck, thereby reducing the risks of error and simplifying the entire construction of the device.

According to one aspect of the present invention, there is provided a mode discriminating device for an image signal processing system, the device comprising:
a switch arranged to be rotated by a motor;
a voltage dividing means for producing predetermined voltages depending upon the angular position of the switch; and
a microcomputer for discriminating a mode of a deck of the system on the basis of the divided voltage supplied from the voltage dividing means.

Preferably, the voltage dividing means comprises a plurality of impedance elements for dividing a power voltage, a plurality of connecting taps for outputting the divided voltage, a connecting element for selecting at least one of the voltages output from the taps, and an output terminal for outputting the selected voltage externally.

Preferably, the connecting element is arranged in the switch.

Preferably, the connecting element is formed from a resilient material.

Preferably, the output terminal is in a form of a circle and is normally connected to a side of the connecting element.

Preferably, the microcomputer comprises an analog to digital converter for converting the voltage from the voltage dividing means into a digital signal and a mode discriminating means for comparing the digitally converted data with reference data previously set according to modes of the system.

The invention extends to an image signal processing system provided with a mode discriminating device according to any of the preceding aspects of the invention.

The invention extends also to a video recorder and/or reproducer provided with such an image signal processing system.

For a better understanding of the invention, and to show how the same may be carried into effect, reference will now be made, by way of example, to the accompanying diagrammatic drawings, in which:
Figure 1 is a view showing one example of a mode discriminating device for an image signal processing system according to the present invention; and
Figure 2 is a flowchart illustrating an operational sequence of a microcomputer in Figure 1.

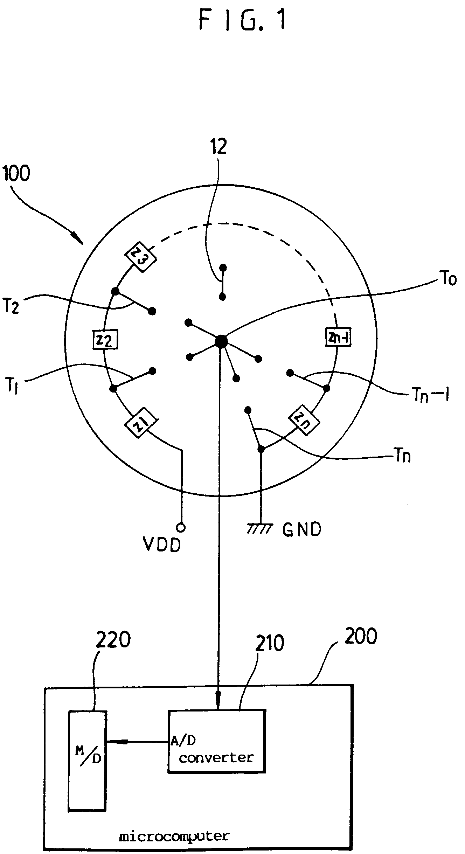

Referring to Figure 1, a cam switch, generally designated 100, has a connecting element 12 formed in an electrical conductive relation therewith.

According to this embodiment of the present invention, a voltage divider serving as a voltage dividing means comprises a plurality of impedance elements Z1 to Zn and a plurality of connecting taps T1 to Tn, the connector 12 and an output terminal To. The voltage divider is arranged on a deck opposite the connector 12 formed in the cam switch 100.

A power voltage VDD is supplied to the voltage divider and an output voltage divided by the impedance elements Z1 to Zn is produced through the connecting taps T1 to Tn.

The connecting element 12 has a length sufficient to simultaneously contact with the connecting taps T1 to Tn and the output terminal To.

Preferably, the connecting element 12 is formed of a resilient material in order to provide an excellent contact with the connecting taps T1 to Tn and the output terminal To. Also, the connecting element 12 if formed from a resilient material may resist abrasion occurring due to a mechanical rubbing with the taps T1 to Tn and the output terminal To.

The divided voltage produced by the impedance elements Z1 to Zn is output from the output terminal To through the connecting taps T1 to Tn and the connecting element 12.

A microcomputer, generally designated 200, has an analog to digital converter 210 which converts the divided voltage into a digital signal and a mode discriminator 220 which discriminates a present mode of the image signal processing system on the basis of the voltage digitally converted by the analog to digital converter 210.

When the image signal processing system with the mode discriminating device of the invention is operated, a loading motor (not shown) is also operated and the cam witch 100 is thus rotated by a rotating force of the loading motor. As the cam switch is rotated, the connecting element 12 in the voltage divider provided in the cam switch 100 is rotated. Accordingly, the connecting taps T1 to Tn of the voltage divider are selectively connected to the output terminal To.

Upon the selective connection of the connecting taps T1 to Tn to the output terminal To, the voltages divided by the respective impedance elements Z1...., Zn are output from the connecting taps T1 to Tn to the output terminal To through the connecting element 12.

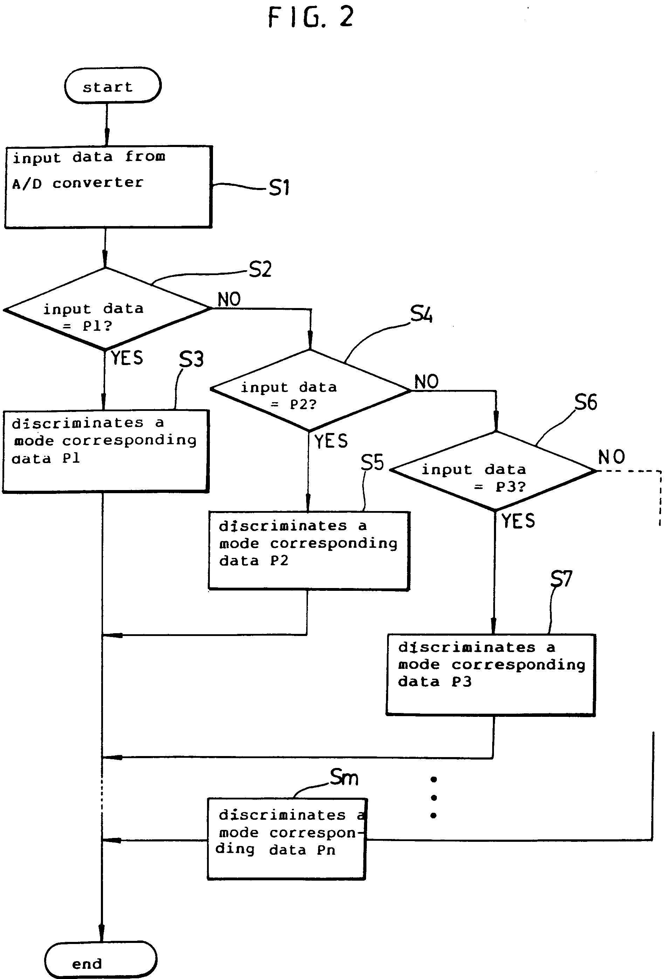

The output voltage is entered to the analog to digital converter 210 in the microcomputer 200, which converts it into digital signal. The digitally converted voltage is input to the mode discriminator 220 which discriminates a mode of the system on the basis of the voltage amplitude as shown in a flowchart of Figure 2.

Now, a description will be given with reference to a process of discriminating a mode of the system, referring to Figure 2.

First, in the case of a first mode (for example, a stop mode) when the connecting tap T1 and the output terminal To are connected by the connecting element 12 provided in the cam switch 100, the voltage V1 of the output terminal To can be expressed as follows.$\text{V1 =} \frac{\text{Z2+Z3+···+Zn}}{\text{Z1+Z2+···+Zn}} {\text{· V}}_{\text{DD}}$

The voltage V1 obtained by the equation (1) is entered through the output terminal To to the analog to digital converter 210 in the microcomputer 200, which converts the voltage V1 into a digital signal.

The digitally converted data is supplied from the analog to digital converter 210 to the mode discriminator 220 as illustrated at step S1 in Figure 2. Consequently, the mode discriminator 220 compares the digital data input with reference data P to Pn previously set in correspondence to the modes as illustrated in steps S2, S4, S6,...... If the digital input is identical to the data P1 corresponding to the first mode previously set, the mode discriminator 220 determines that the first mode is set to the system as the present mode 1 at step S3.

On the contrary, in a second mode (for example, a playback mode), when the connecting tap T2 is connected to the output terminal To by means of the connector 12, the voltage V2 of the output terminal To can be expressed as follows.$\text{V2 =} \frac{\text{Z3+Z4+···+Zn}}{\text{Z1+Z2+···+Zn}} {\text{· V}}_{\text{DD}}$

The voltage obtained by the equation (2) is entered through the output terminal To to the analog to digital converter 210 in the microcomputer 200 which converts the voltage V2 into a digital signal.

The digitally converted data is supplied from the analog to digital converter 210 to the mode discriminator 220 as illustrated at step S1 in Figure 2. Consequently, the mode discriminator 220 compares the digital data input with reference data P1 to Pn previously set in correspondence to the mode as illustrated in steps S2, S4, S6,.... If the digital input is identical to the data P2 corresponding to second mode previously set, the mode discriminator 220 determines that the second mode is set as the present system mode at step S5.

For example, in a third mode (for example, a fast-forward FF mode), when the connecting tap T3 is connected to the output terminal To by means of the connector 12, the voltage V3 of the output terminal To can be expressed as follows.$\text{V3 =} \frac{\text{Z4+···+Zn}}{\text{Z1+Z2+···+Zn}} {\text{· V}}_{\text{DD}}$

The voltage obtained by the equation (3) is entered through the output terminal To to the analog to digital converter 210 in the microcomputer 200 which converts the voltage V3 into a digital signal.

The digitally converted data is supplied from the analog to digital converter 210 to the mode discriminator 220 as illustrated at step S1 in Figure 2. Consequently, the mode discriminator 220 compares the digital data input with reference data P1 to Pn previously set in correspondence to the mode as illustrated in steps S2, S4, S6,.... If the digital input is identical to the data P3 corresponding to the third mode previously set, the mode discriminator 220 determines that the third mode is set as the present system mode in step S3.

As described above, when the system has modes (generally, six to eight modes are set for the image signal processing system), it can be understood that the voltage divider having connectors T1 to Tn is used to discriminate the modes of the system. The connecting taps T1 to Tn can be arranged at different distances and the associated connecting tap and the output terminal, of course, are connected by the connector 12 at a position corresponding to the respective modes.

As mentioned above, the voltage corresponding to the impedance elements and detected according to the rotation of the cam switch of the deck is compared with the data previously set in the microcomputer to discriminate the mode of the system.

Accordingly, a single port is employed to discriminate the mode, the risk of erroneous components can be decreased due to the reduced number of the ports and the entire construction of the device can be also simplified considerably.

Although a specific example of the present invention has been described, it will be apparent that various modification and changes will be made therein without departing from the spirit and scope of the invention. Particularly, in the aforementioned description, the output terminal and connector are open, but the output terminal may be in a form of circle and the connector normally connected at its one side to the output terminal. In addition, the pattern of the connecting tap and the connector may be changed as desired.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A mode discriminating device for an image signal processing system, the device comprising:
a switch arranged to be rotated by a motor;
a voltage dividing means for producing predetermined voltages depending upon the angular position of the switch; and
a microcomputer for discriminating a mode of a deck of the system on the basis of the divided voltage supplied from the voltage dividing means.

2. A mode discriminating device according to claim 1, wherein the voltage dividing means comprises a plurality of impedance elements for dividing a power voltage, a plurality of connecting taps for outputting the divided voltage, a connecting element for selecting at least one of the voltages output from the taps, and an output terminal for outputting the selected voltage externally.

3. A mode discriminating device according to claim 2, wherein the connecting element is arranged in the switch.

4. A mode discriminating device according to claim 2 or 3, wherein the connecting element is formed from a resilient material.

5. A mode discriminating device according to claim 2, 3 or 4, wherein the output terminal is in a form of a circle and is normally connected to a side of the connecting element.

6. A mode discriminating device according to any of the preceding claims, wherein the microcomputer comprises an analog to digital converter for converting the voltage from the voltage dividing means into a digital signal and a mode discriminating means for comparing the digitally converted data with reference data previously set according to modes of the system.

7. An image signal processing system provided with a mode discriminating device according to any of the preceding claims.

8. A video recorder and/or reproducer provided with an image signal processing system according to claim 7.
